# EUROPEAN PATENT APPLICATION

(11) **EP 1 747 713 A1**
(43) Date of publication of application: **31.01.2007**
(21) Application number: 05077863.8
(22) Date of filing: 13.12.2005
(51) Int. Cl.: A01G 9/10, A01G 7/00

(54) **Method, system, substrate or substrate element and warehouse for cultivating crop bearing plants**

(30) Priority: 26.07.2005 EP 05076716
(71) Applicant: Rockwool International A/S, 2640 Hedehusene (DK)
(72) Inventor: Bouwens, Paul, PO Box 1160, 6040 KD Roermond (NL); Blaakmeer, Anton, 5803 LE Venray (NL)
(74) Representative: Grootscholten, Johannes A.M.

(57) **Abstract**

The invention relates to a method of cultivating crop bearing plants, comprising the steps of providing a substrate (2); growing at least one crop plant on or in the substrate with original roots in the substrate and at least a stem (7) above the substrate; after harvesting crops from the at least one crop plant for a period of time, arranging a root growth promoting element (14) at the stem at a distance from the original roots; and allowing additional roots to be formed at the root growth promoting element. The invention further relates to a system, a substrate or substrate element, and a warehouse for cultivating crop bearing plants.

## Description

The present invention relates to a method, system, substrate or substrate element and greenhouse for cultivating crop bearing plants. "Crops" is used here to indicate vegetables as well as flowers or the like. For instance, the present invention relates to crop plants, which have crop bearing capacity near the top of the stem, which keeps growing and lengthening. Such crop bearing plants are normally referred to as shoot-root plants, and examples thereof are for instance tomato plants, cucumber plants, egg-plants, peppers, and many other examples are available.

Once a portion of the stem of such a plant has had crops, that have been harvested therefrom, later on no further crops will grow at that portion of the stem. As noted above, the stem keeps growing or lengthening. Therefore, the distance between the root system at the base of the stem will be at an increasing distance from the portion of the stem (the top) where crops are actually growing for harvesting. This distance can become, in the prior art, a limitation to the time period, during which a single plant can be used for harvesting crops. In particular, when stems of such plants can reach lengths of over 10 metres, fluids and nutritions will have to travel over a longer distance from the root system to the crop bearing portion of the stem over the entire length of the stem.

In a prior art example according to EP-A-1.166.621 it is proposed to provide lengthy channels filled with fluid in order to initiate root growth on the stem along the portion of the stem, that is in contact with or submerged in the fluid with nutritious substances added thereto. When the stem grows longer, the top portion of the stem bearing crops for harvesting is lowered and the fresh portion of the stem, previously above the fluid, will then be brought into contact with the fluid or submerged therein. In a fact, the portion of the stem in the fluid or in contact therewith is then shifted through the fluid, and a bottom portion of the stem with the oldest roots thereon can then be severed.

However, this prior art disclosure does not disclose any specific embodiments, in which substrates or substrate elements are used, comprising fibrous wool, such as stone wool, glass wool, etc.. Other examples are organic matter, potting soil, regular earth, etc.. Especially the limitation of the disclosure to drawing the stem through a canal comprising a fluid bath, in which additionally grown roots are suspended, is in particular not applicable to systems, wherein substrates or substrate elements are employed, since the plant roots grow into the substrate and cannot be "dragged" without irreparable damage to such roots. The disclosure of EP-A-1.166.621 is deficient in this respect.

Further, systems wherein roots are made to grow in channels filled with water or liquid are far more susceptible to diseases than plants growth systems, that are based on soil, earth, or on substrates or substrate elements, comprising fibrous mineral wool.

According to the present invention an improved method, system, substrate or substrate element and warehouse are provided in accordance with claims 1, 21, and 26, respectively. Further, the use of root growth promoting substances in substrates or substrate elements is an aspect of the present invention in accordance with claim 27.

In a method according to the present invention, the steps as defined in claim 1 are performed. The disadvantages of prior art technologies are herewith eliminated or at least mitigated. The root growth element can be arranged at a distance from the original roots, which distance can be selectively adjusted, based on plant knowledge or circumstances. The skilled person will be able to make such a selection without any special effort on the basis of the present disclosure. Allowing additional roots to be formed at the root growth promoting element can comprise several aspects and features, that are preferred in accordance with the present invention, and are defined in the dependent claims. Thus, a method exhibiting the advantages of substrate growth is provided, and additionally achieving plant rejuvenation by generating, at selected positions along the length of the stem, new plant roots, each forming a new root system, thus shortening the distance to the top of the plant in improving supply of fluids and nutritions to that portion of the stem, where crops are growing to be harvested. As a result life of harvest bearing plants can be lengthened, in some cases from approximately 9 months to up to 2 years or more.

The method according to the present invention comprises numerous preferred embodiments, of which a specific number is defined in the dependent claims. However, these dependent claims are merely preferred embodiments and exemplary of a broader scope of possible aspects of the method according to the present invention than those, that are specifically defined in the dependent claims, if and in as far as still within the scope of the independent claims.

For instance, it is possible to repeat the steps of harvesting and allowing additional roots to be formed, wherein a further root growth element is arranged at the stem at a larger distance from the original roots than any previously arranged root growth element. Thus, a subsequent places along the length of the stem, such root growth promoting elements can be arranged subsequently and thereby the effective life of the plant can be lengthened. For instance, for tomato plants, it is envisaged that the effective life span of such a plant can be lengthened from approximately three quarters of a year to two years or more. Moreover, since supply of fluids and nutritions to the top of the stem, where growth of crops to be harvested actually takes place, crop amounts can be increased.

In a preferred embodiment of the invention the method comprises the step of removing the original roots. Thus, floor space in a warehouse can be more efficiently used, when the original roots are removed, since then a place in or on a substrate or substrate element can be made free for subsequent root generation, for instance in steps c and d of claim 1. Naturally, original roots will only be removed, in accordance with claim 4 as an example by severing the stem, when a subsequently generated root system is sufficiently developed to support the entire plant, and especially the crop bearing top portion of the stem thereof.

In a further exemplary embodiment of the method according to the present invention, arranging the root growth element or a further root growth element comprises providing a substrate element at the stem. Thus, with a substrate element, a portion of the stem where root growth is desired, the circumstances can be generated or created to actually promote root growth at the stem. In embodiments, where plants are actually grown on a slab of a substrate, for instance a fibrous wool, the substrate element forming the root growth element can be linked or coupled to the substrate slab to enable the roots to grow into the slab, just like the original roots.

In yet a further preferred embodiment of a method according to the present invention at least one root growth promoting substance is added to the root growth element. Thus, desired circumstances for generating roots or root systems can be created, if not already provided by arranging a substrate element forming the root growth element or any other root growth element at the stem.

In an embodiment employing a root growth promoting substance, this substance can be added to the substrate and/or the root growth element during production thereof. Depletion of the root growth promoting substance may not pose a problem, especially if generating new roots at the stem takes an equal or less amount of time as depletion of the root growth promoting substance. In embodiments, where generating new roots may take longer than a time, during which root growth promoting substances can be supplied from a substrate and/or root growth element, to which the substance has been added in production, the root growth promoting substance can be supplied in use. For instance, the root growth promoting substance can then be supplied, together with fluids and nutritions in a regular manner, for instance by means of a dripping system. Also, a substrate or root growth element can be submerged in fluid, to which such a root growth promoting substance can, in use, be added.

In a specifically preferred embodiment, the root growth promoting substance has a dual function. For instance, the root growth promoting substance can also be a binder in the production process of the root growth element and/or the substrate. It is also possible to additionally employ traditional single purpose binders or even a binder referred to as "farez" from "Grotop". In yet another exemplary embodiment having a root growth promoting substance, this can have a dual function as (also) a wetting agent. Additional other wetting agents can also be employed, such as traditionally known wetting agents. It is noted, that when the root growth promoting substance has a dual function as further a binder and/or a wetting agents, these dual functions are evidently effective in production of a root growth element or substrate element and/or the substrate, but can also be used in situ in use in a greenhouse. It is further noted, that other additional substances can be added, apart from the root growth promoting substance, especially when the effectiveness of the root growth promoting substrate is (slightly) less than required as a binder and/or a wetting agent than desired. For instance, Grodan's system comprising a phenolic resol and a "PUF" and a wetting agent, can also additionally be employed.

In a specifically preferred embodiment, the root growth promoting substance comprises lignosulfonates. The use of lignosulfonates is the object of independent claim 27. Lignosulfonates are considered to be possible binders and/or wetting agents. Such lignosulfonates are a derivative or residue of a regular paper production process, wherein as a resource wood is employed. The type of wood can determine the effectiveness and the molecule fractions of the lignosulfonates, that are employed. Experiments are expected to show the most effective lignosulfonates for specific utilizations as root growth promoting substance. Also, the effectiveness of these lignosulfonates or derivates or polymers thereof as binders and/or wetting agents is envisaged to be an aspect for a selection of specific lignosulfonates. Some selected lignosulfonates are expected to exhibit anti-fungus action, and with some degree of certainty lignosulfonates are expected to exhibit stimulation of the de-differentiation phase relative to plants subjected to the effects of such lignosulfonates, e.g. when an incision or cut is made. Further, adding a rooting hormone may provide additional benefits concerning root growth promotion, especially when more emphasis is laid on the function of lignosulfonates as a binder and/or a wetting agent, than on the root growth promoting features thereof. Lignosulfonates are in themselves also expected to be beneficial for germination of seeds, which are sowed directly in propagation blocks or substrates or substrate elements, usually though not exclusively comprising fibrous wool. Lignosulfonates are expected to stimulate plant growth, because of the sole fact that lignosulfonates appear to surprisingly repel nematodes, which could harm the root systems of plants. It is apparent, that providing lignosulfonates and/or derivates thereof and/or polymers thereof is at present to be considered highly beneficial. The specific selection of certain types of lignosulfonates will depend on the actual utilization envisaged (as a root growth promoting substance, a binder, a wetting agent, an anti-fungus substance, etc.).

When utilizing lignosulfonates, cations and/or counter-ions therein are preferably purified and/or changed to a predetermined extent using a technion. Such cations could possibly be selected from a group comprising K⁺, Ca²⁺, Mg, Na and NH₄⁺, etc, and any other technion or purifying substance can be employed within the scope of the present invention.

In specifically preferred embodiments utilizing lignosulfonates, these exhibit a molecule fraction of more than 1000 gr/mole, preferably between 5.000 and 20.000 gr/mole, and more preferably between 10.000 and 15.000 gr/mole. However, as noted above, the specific features and properties of the lignosulfonates should be selected in dependence upon their envisaged utilization, and other molecule fraction than those, specifically mentioned above, can also be expected to exhibit a beneficial effect.

In a specifically preferred embodiment of the method according to the present invention, arranging a root growth element at the stem further comprises inducing a root growth promoting stress at the stem. Such a stress could be induced by placing the element or by making an incision or cut, or any other step to cause, in the plant at the place of the root growth element at the stem, a desired root growth response. Also at the plant a mix of natural or artificial growth hormones, such as cytokenines, e.g. from the roots, and auxines, e.g. from higher up along the stem, and/or brasinosteroids can be generated, induced or added. Any other step to induce root growth may also be contemplated. Also UV light could be employed to induce the desired root growth stress.

The present invention will be further elucidated herein below, in a description referring to the accompanying drawings, in which alike or similar components, features and aspects are designated with the same reference numbers, and in which:
Fig. 1 schematically shows in a perspective view a first embodiment of the present invention and certain preferred features thereof, and
Fig. 2 schematically shows a further embodiment of the present invention in a perspective view, exhibiting alternatively and/or additionally certain other specific features.

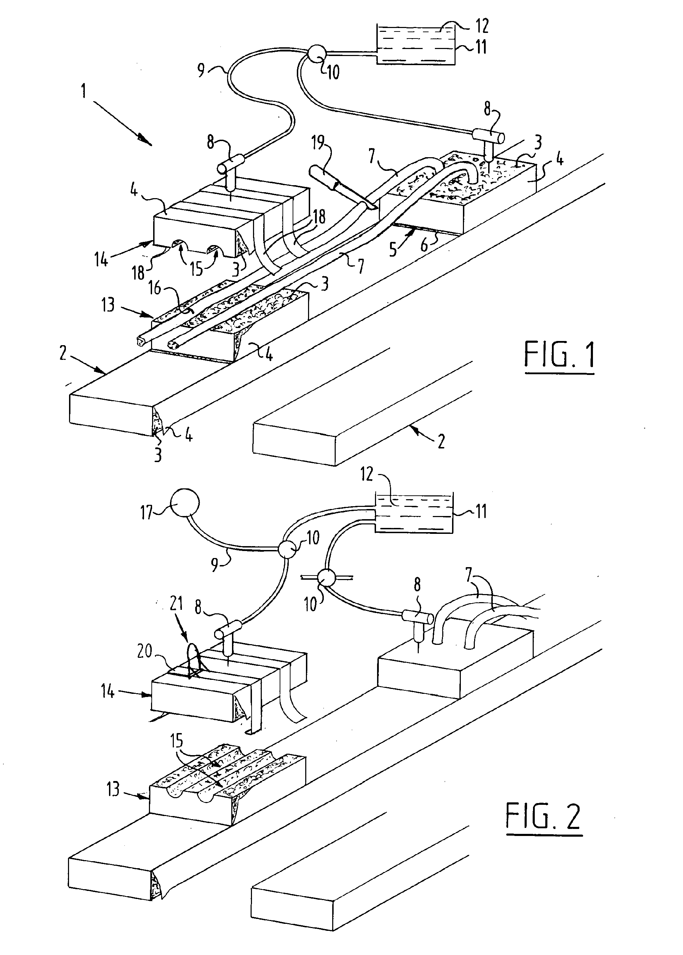

In the representation of fig. 1 an embodiment of the method according to the present invention is shown in the form of a system 1. The system comprises at least one substrate slab 2, formed by a fibrous mineral wool 3 covered by a sheet 4. The sheet can be manufactured from one or more materials from a group, comprising plastic, mineral wool, ceramic material, wax plates, etc.. On the substrate slab 2 a substrate block 5 is arranged. At the position of the substrate block 5 a cut 6 is made in the sheet 4. The bottom of substrate block 5 is not covered by plastic sheet 4, nor is the top of the substrate block 5. Therefore, roots of a plant can be grown in a substrate block 5 and then placed on substrate slab 2 at the position of the cut 6, where after roots of the plant can grow into the substrate slab 2.

A stem 7 of a plant can then grow from the top of the substrate block 5. The roots (not shown) of the plant, to which the stem 7 belongs, are supplied with fluids and nutritions via drippers 8 connected via a conduit 9 and through a fluid divider/controler 10 to a fluid container 11, containing fluids 12, to which optionally nutritions can have been added.

At a distance along the length of the stems 7 from the substrate block 5, an additional substrate block 13 is, according to the present invention, arranged on the substrate slab 2. The substrate block 13 comprises fibrous mineral wool and a sheet cover 4, just like the above described substrate block 5.

Further, in accordance with the present invention, a root growth promoting element in the form of a substrate element 14 is provided. This substrate element 14 is also formed from fibrous mineral wool 3 and a sheet cover 4. The top of the substrate element 14 is also covered with a sheet cover 4. In the underside of the substrate element 14, savings or depressions 15 are provided. These can have dimensions (lxbxh) of e.g. (15-20)x(15-20x(2-8) cm or more, preferably e.g. 20x15x6 cm, for improved durability, strength, sturdiness etcetera. Alternatively, an arbitrary type of clamp that is suitable for the purpose of arresting the stem in order to allow roots to be generated may also be used with the benefit of possibly a more secure fixation of the stem 7 than with only a mineral wool block 13.

Such a clamp 20 may reduce considerably the labour effort for arranging growth block 14 in contact with the stem 7, and preferably also with the substrate slab 2 via the block 13. For instance, such a clamp 20 may be embodied as a sling or strap to be arranged for contact around at least the growth block 14 and the stem 7. Preferably a quick tensioning system 21 would be provided. The clamp 20 can be a metal band, like a cake form, with an easily operable closing tensioning mechanism 21 for arranging around the growth block 14 and the stem 7, (at least) if the slab 2 is on a table, for instance a metal surface, the band or strap 20 can be arranged under the table and over the growth block 14.

In a method according to the present invention, the stems 7 of plants are guided over additional substrate block 13 and arranged thereon. There after, the substrate element 14 with the savings or depressions 15 oriented in a downward direction, is placed over the additional substrate block 13. Thereby, the stems 7 are accommodated, preferably in a tight fitting manner, in the savings or depressions 15. The savings or depressions 15 can be arranged in the underside of the substrate element 14 in any arbitrary manner, like needing or any other appropriate action. The savings or depressions 15 can also be arranged in the underside of the substrate element 14 during production. Preferably the depressions 15 are dimensioned for a high degree of contact between the stem 7 and the surrounding mineral wool, fibrous material. The depressions 15 may have cross-section dimensions 1,5x1,5 cm or 2x1 cm, or any other form, shape and dimension that corresponds closely with the cross-section shape, form and dimension of the stem 7. Drippers 8 can be placed in the element 14 after that element is arranged on the stem 7 as shown in figures 1 and 2.

After having arranged the substrate element 14 over the additional substrate block 13, whereby the stems 7 are accommodated in the savings or depressions 15, the additional substrate block 13 and the substrate element 14 can be coupled together by using adhesive tape 18. Alternatively a special clamp can be used to keep the stem 7 in the depressions 15, or to keep the slab 2, block 13 and element 14 together, with the stem 7 there between.

Prior to arranging the substrate element 14 on top of the additional substrate block 13, a root growth promoting stress can be induced in the stem. In the shown example of the fig. 1 such a stress is induced in the form of a cut or incision 16. Any other suitable measure taken to induce root growth promoting stress is alternatively possible.

In the embodiment of fig. 1, either or both of the additional substrate block 13 and the substrate element 14 can have lignosulfonates and/or any derivatives thereof and/or any polymers thereof added to the fibrous mineral wool material 3. This substance is added to promote root growth. Any other root growth promoting substance may alternatively or additionally also be used.

When utilizing lignosulfonates and/or derivatives and/or polymers thereof, such substances may also exhibit a dual effect in that during production such substances are suspected to exhibit the function of a binder and/or of a wetting agent.

If lignosulfonates are not incorporated into the additional substrate block 13 or the substrate element 14 during production thereof, such substances primarily for promoting root growth may also be supplied in use, as shown in fig. 2, where a supply 17 of lignosulfonates is connected via a conduit 9 to the fluid divider or controller 10 for administering or injecting lignosulfonates and/or derivatives and/or polymers thereof into the additional substrate block 13 and/or the substrate element 14 via the drippers 8.

After having arranged the root growth promoting element of substrate element 14 on top of the additional substrate block 13 with the stem(s) 7 there between, optionally after having made an incision 16 in the stem(s) 7, and allowing the stem(s) 7 to generate a new root system for a time period, during which a sufficiently developed root system is allowed to grow for sustaining the rest of the plant, the original root system in the substrate slab 2 and/or the substrate block 5 can be removed, for instance by severing the stem(s) 7 at the position, schematically indicated by knife 19. Any other method of removing the portions of the stems 7 with the original roots may also be employed. There after, the substrate block 5 containing the original root system of the plants, to which the stems 7 belong, could possibly be employed as an additional substrate block 13, on top of which a substrate element 14 can be arranged in the manner shown on the left side in fig. 1. Then stems 7 from a plant further to the right top of fig. 1 can be accommodated between the substrate block 5 acting as an additional substrate block 13 and a further substrate element 14, for root development to be induced at the position of the original substrate block 5. Thus a practically infinite continuous process can be provided, in which highly efficient use is made of the available floor space and/or space on the substrate slab 2, while lengthening the life expectancy of crop bearing plants, at least the efficient life expectancy, during which crops can be harvested from these crop bearing plants.

It is noted, that also the original substrate block 5, in which the plants, to which the stems 7 belong, have grown a root system, can be provided with a root growth promoting substance, for instance a lignosulfonate or any other root growth promoting substance, such as a hormonal preparation. Evidently, also the root growth promoting substance, specific to the present invention, can also be incorporated into the fibrous material wool 3 of the substrate slab 2.

In such utilizations of root growth promoting substances, like lignosulfonates, derivatives thereof and polymers thereof, it is considered to be highly beneficial, if such substances can perform dual functions, for instance as a binder and/or a wetting agent, apart from the effect of promoting root growth.

Lignosulfonates are by nature, as is mentioned above, waste products from wood materials used in the paper industry and have therefor by nature an organic structure. Apart from their organic structure, lignosulfonates most like comprise in-organic compounds like cations as counter-ions, that affect the functionality and also effectiveness of the lignosulfonates in respect to the use of lignosulfonates, both as a binder/wetting agent as well as a root growth promotor. This is determined by the type of cation that is used or available. Most effective cations in relation to the present invention are expected to be from a group, comprising: K⁺, Ca²⁺, Mg, Na, NH₄⁺, of which Ca²⁺ and Mg are expected to be the most effective ones. These counter ions in lugnosulfonates could or might be purified and/or changed by using a technion.

When using lignosulfonates, these preferably exhibit specific desired features and are also preferably provided or supplied in predetermined quantities. The features of these substances can be the result of the process of obtaining these substances, for instance as a residue or derivative of a paper producing industry. Dependent on the process of obtaining lignosulfonates or any other similar substances, these can exhibit desired molecule fractions. Resulting molecule fractions are expected to be dependent upon the resources of the paper industry or other manufacturing process, with which these substances are obtained. Preferably, lignosulfonates are added in a percentage by weight or by volume, that closely corresponds to a high degree of efficiency regarding root growth promoting features or effects thereof. When lignosulfonates are employed as root growth promoting substances (or even added as a wetting agent), especially when applied to a substrate after production thereof, i.e. in use and in situ in a grower's warehouse or glass house, addition of said lignosulfonates is preferably performed or effected on a volume basis, for example in the range 0,1-10% v/v, preferably in the range 0,3-5% and more preferably in the range 0,5-4%. Similar considerations may apply, when utilizing these substances as a binder and/or a wetting agent, which may result in different values. However, with as an object a high efficiency for promoting root growth, a percentage by weight based on solid content of lignosulfonates of between 0.3 and 20, more preferably between 1 and 15, and most preferably between 1,5 and 10 is foreseeable.

Although already many alternative and additional embodiments have been described herein above, it is noted, that the present invention is in no way limited to the specifically shown and described embodiment of the enclosed figures and the corresponding description herein. Additionally it is noted, that the savings or depressions 15, which are in the embodiment of fig. 1 arranged in the substrate element 14, forming the root growth promoting element according to the present invention, these savings and/or depressions can also be arranged in the additional substrate block 13, as is shown in fig. 2. Also, instead of two savings, one or three or four or more could be provided. From these additional and alternative embodiments, which are all well within reach of the skilled person, after having been confronted with the disclosure of the present invention, it is apparent that the present invention is only restricted to the definition according to the accompanying independent claims, and that other and additional embodiments then those, specifically shown and described, can also fall within the scope of these claims and should be considered embodiments of the invention, unless the definitions according to the enclosed independent claims are departed from.

The root growth promoting elements are not necessarily provided with lignosulfonates. A top cover layer of plastic or the like (as previously mentioned, other materials are also possible) on the root growth element, as shown in the figures, can be omitted.

In an embodiment separate drippers 8 or (at least) an independent dripper-system is used for the element 14 to adjust humidity or any corresponding parameter (EC value) to ensure good conditions for root growth. The element 14 should be sufficiently wet, which could mean another humidity than that of the slab 2, which can then be kept at a separate appropriate humidity by means of its own corresponding drippers or system.

Also other shapes and forms than the block shaped element 14 as the root growth element can be contemplated, like a semi-cylindrical shape, and the root growth element does not have as an only and single embodiment the shown and described element 14.

Further it is noted that within the meaning of the expression "crops", as used herein, also is encompassed, flowers, such as anthurium or cymbidium, as opposed to an explanation only encompassing vegetable crops. The substrate 2 could be embodied as a pot, even.

## Claims

1. Method of cultivating crop bearing plants, comprising the steps of:
(a) providing a substrate (2);
(b) growing at least one crop plant on or in the substrate with original roots in the substrate and at least a stem (7) above the substrate;
(c) after harvesting crops from the at least one crop plant for a period of time, arranging a root growth promoting element (14) at the stem at a distance from the original roots;
(d) allowing additional roots to be formed at the root growth promoting element (14).

2. Method according to claim 1, further comprising repeating steps c and d at least once, where, in a repetition of steps (c) and (d), a further root growth promoting element is in step (c) arranged at the stem at a larger distance from the original roots than any previously arranged root growth promoting element.

3. Method according to claim 1 or 2, followed by removing the original roots.

4. Method according to claim 3, comprising severing the stem (7) between the original roots and the additional roots.

5. Method according to any one of the preceding claims, wherein arranging the root growth promoting element or a further root growth promoting element comprises providing at the stem at least one component from a group comprising: an organic matter element, a potting soil element, an earth element, a mineral wool element, a substrate element, a special clamp, etc.

6. Method according to any one of the preceding claims, comprising adding at least one root growth promoting substance to the root growth promoting element.

7. Method according to any one of the preceding claims, comprising adding at least one root growth promoting substance to the substrate (2), and/or the root growth promoting element.

8. Method according to claim 7, further comprising coupling the substrate (2) and the root growth promoting element.

9. Method according to any one of the claims 6 - 8, comprising: adding the root growth promoting substance to the substrate and/or the root growth promoting element in production of the root growth promoting element and/or the substrate.

10. Method according to any one of the claims 6 - 9, comprising: adding the root growth promoting substance to the root growth promoting element and/or the substrate in use of the root growth promoting element and/or the substrate.

11. Method according to any one of the claims 6 - 10, wherein the root growth promoting substance is a binder in the production process of the root growth promoting element and/or the substrate.

12. Method according to any one of the claims 6 - 11, wherein the root growth promoting substance is a wetting agent for the root growth promoting element and/or the substrate.

13. Method according to any one of the preceding claims 6- 12, wherein the root growth promoting substance comprises lignosulfonates, derivatives and/or polymers thereof.

14. Method according to claim 13, wherein prior to adding, counter-ions in the lignosulfonates are purified and/or changed to a predetermined extent using a technion.

15. Method according to claim 14, wherein kations or counter-ions in the lignosulfonates comprise at leas one of the substances from a group, comprising K, Ca, Mg, Na, and NH₄⁺ etc.

16. Method according to any one of the previous claims 13 - 15, wherein the lignosulfonates exhibit a molecule fraction of more than 1000 gr/mole, preferably between 5.000 and 20.000 gr/mole and more preferably between 10.000 and 15.000 gr/mole.

17. Method according to claim 13, especially when dependent upon claim 10 or claim 12, wherein lignosulfonates are added in a percentage by volume of 0,1-10 v/v, preferably of 0,3-5%, and more preferably of 0,5-4%.

18. Method according to any one of claims 13 - 17, wherein lignosulfonates are added in a percentage by weight of between 0.3 and 20, more preferably between 1 and 15 and most preferably between 1,5 and 10.

19. Method according to any one of the preceding claims, wherein arranging a root growth promoting element at the stem comprises the step of inducing a root growth promoting stress at the stem.

20. Method according to claim 19, wherein inducing the root growth promoting stress comprises at least one of the steps of: the arranging of the root growth element; a step of employing light, especially UV light, at the stem; a step of arranging a cut in the stem; a step to generate in the plant at the position for the root growth element a desired mix of a plant's growth hormones comprising at least one of the growth hormones from the group, comprising: cytokenines, e.g. from the roots, auxines, e.g. from higher up along the stem, and brasinosteroids; etc..

21. System for cultivating crop bearing plants, comprising means for performing the steps of at least one of the preceding claims.

22. Substrate or substrate element for cultivating crop bearing plants, comprising at least one root growth promoting substance.

23. Substrate or substrate element according to claim 22, wherein the root growth promoting substance comprises: at least one of lignosulfonates; derivatives of lignosulfonates; and polymers of lignosulfonates, etc.

24. Substrate or substrate element according to claim 22 or 23, wherein the added root growth promoting substance is added as one of a binder and a wetting agent for ordering production or in use of the substrate or the substrate element or the root growth promoting element.

25. Substrate or substrate element for cultivating crop bearing plants, comprising at least one of lignosulfonates; derivatives and/or polymers of lignosulfonates, etc. as one of a binder and a wetting agent.

26. Warehouse for cultivating crop bearing plants, comprising:
- means for performing at least one of the steps according to
- the previous method claims 1 - 20; and/or
- the system according to claim 21; and/or
- the substrate or substrate element according to at least one of the claims 22 - 24.

27. Use, in substrates or substrate elements or root growth promoting elements, of at least one of the substances from the group lignosulfonates, derivatives and/or polymers of lignosulfonates, etc..
